## Europäisches Patentamt
## European Patent Office
## Office européen des brevets

(19)

(11) Publication number: **0 146 193**
A1

(12)

# EUROPEAN PATENT APPLICATION

(21) Application number: **84201853.3**

(22) Date of filing: **13.12.84**

(51) Int. Cl.⁴: **F 16 L 5/02,** F 16 L 59/00, H 02 G 3/22

(30) Priority: **15.12.83 NL 8304314**

(43) Date of publication of application: **26.06.85** Bulletin 85/26

(84) Designated Contracting States: **AT BE CH DE FR GB IT LI LU NL SE**

(71) Applicant: **Beele, Johannes Alfred, De Veken 3, NL-1716 KE Opmeer (NL)**

(72) Inventor: **Beele, Johannes Alfred, De Veken 3, NL-1716 KE Opmeer (NL)**

(74) Representative: **de Boer, Hindrik Geert Jan et al, de Boer & Wigman P.O. Box 5265 De Lairessestraat 131-135, NL-1007 AG Amsterdam (NL)**

(54) Installation for fire protection.

(57) Installation for fire protection consisting of a conduit or cable (3) which is passed through a wall (1), whilst fire-resistant means (9) with intumescent effects have been applied in the vicinity of the passage, the said fire-resistant means consisting of a length of tubing (9, 11) provided with a longitudinal cut (10) and fitted tightly round the conduit (3).

EP 0 146 193 A1

0146193

## INSTALLATION FOR FIRE PROTECTION

BACKGROUND OF THE INVENTION

The invention relates to an installation for fire protection consisting of a conduit or cable which is passed through a wall, whilst fire-resistant means with intumescent effects have been applied in the vicinity of the passage. Known installations of this type have been provided with fire-resistant means with an intumescent effect in the form of a paint which has been applied by brush or spray-gun. This state of the art calls for improvement, firstly because in the vicinity of the passage the amount which can be deposited is relatively small for a useful intumescent effect and secondly the mode of application is time-consuming and difficult, especially when a great number of lines are present which are passed through in a closely packed bundle.

BRIEF SUMMARY OF THE INVENTION

The invention provides an improvement in that the fire-resistant means according to the invention consist of a length of tubing provided with a longitudinal cut and fitting tightly round the conduit. Upon application of this improvement, firstly a considerable quantity of fire-resistant material is present in the vicinity of the passage, so that in the event of a fire so much foam accumulates on the wall that a seal is created also for any smoke generated, and secondly the fire-resistant material is quite simple to apply and therefore more reliable in use because the length of tubing, upon being bent open, can readily be fitted round the conduit or cable whereupon it snaps shut.

In addition, the improvement turns out to be such that, as official fire tests have shown, the lead-through equipment itself need not invariably consist of fire-resistant material.

The invention also comprises a separate length of tubing that is obviously intended for use in a lead-through installation which has to be made fire-resistant.

For a more reliable enwrapment, the length of tubing according to the invention may be provided with a longitudinal cut following a helical course.

For cases where an enhanced insulating and intumescent effect is required during a fire, it is possible to select a length of tubing according to the inventon which has an enlarged rim at one end.

BRIEF DESCRIPTION OF THE DRAWING

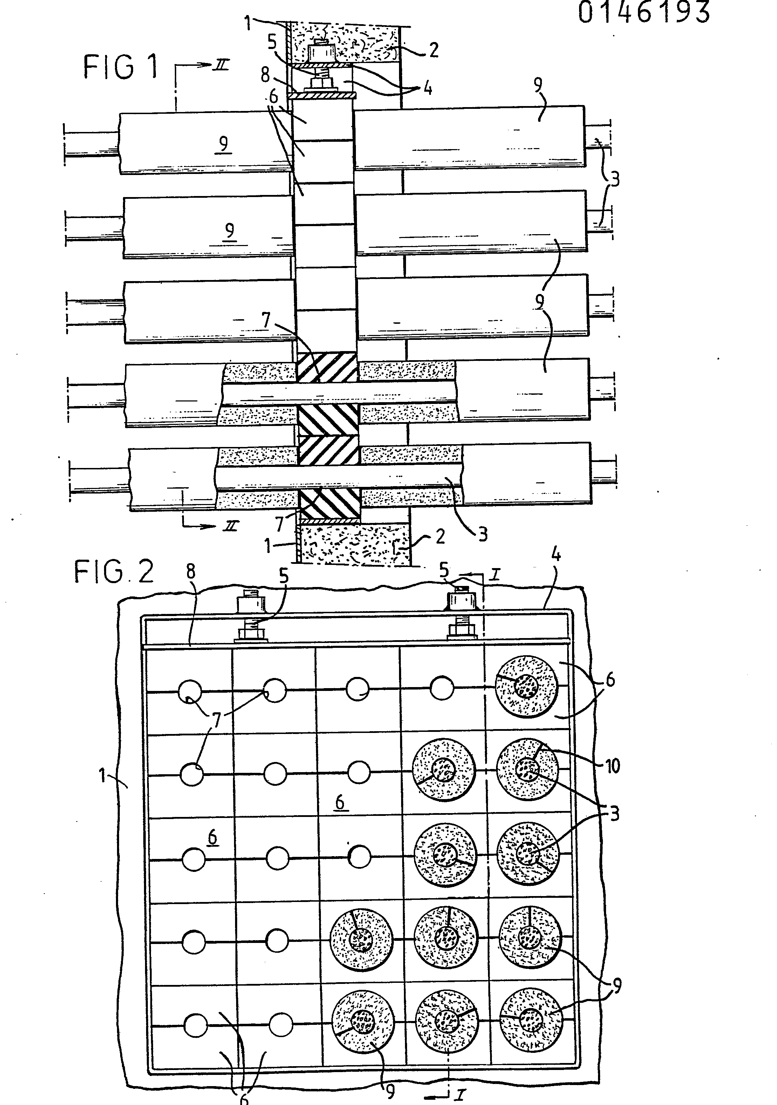

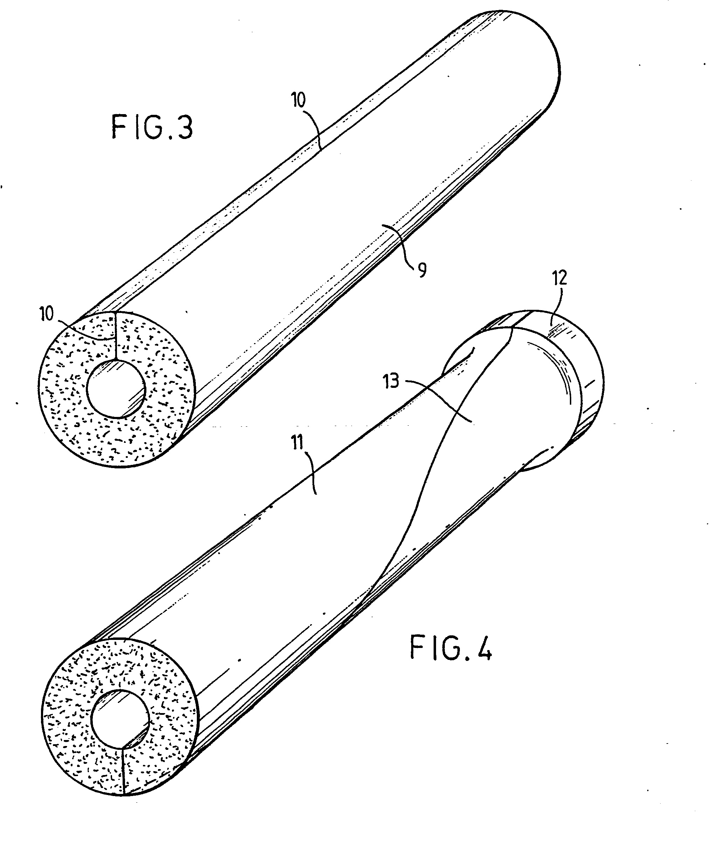

To elucidate the invention, a number of examples will now be described with reference to the accompanying drawings, in which Figure 1 is a vertical cross-sectional view perpendicular to a steel wall at a point where a number of lines are passed through this wall, which lines are provided with lengths of tubing according to the invention; Figure 2 is a sectional view on the line II-II in figure 1; Figure 3 is a perspective representation on an enlarged scale of a length of tubing according to the invention; and Figure 4 represents a variant design of a length of tubing.

DETAILED DESCRIPTION

Figures 1 and 2, illustrating a preferred example of the invention, depict a steel wall 1, for instance a bulkhead in a ship, which has to be fire-resistant. To this end, the wall 1 has been clad with rock wool 2 for heat insulation, but at those spots where lines 3 are passed through the wall 1 other measures have to be taken to prevent transmission of heat. The passage is formed, in otherwise known fashion, by a steel frame 4 which has been welded to the wall 1 and filled up with rubber blocks 6,each of which has a semi-cylindrical cavity such that disposed in pairs with the said cavities facing each other, they form a passage 7 through which lines 3 run. A strip 8 which is vertically displaceable within the framework 4 is pressed by means of bolts 5 on the assembly of rubber blocks 6, so that all rubber blocks are subjected to compressive stress and a seal is achieved between the rubber blocks 6 and the framework 4 as well as between the rubber blocks 6 and the lines 3 running through the passage 7.

0146193

To enhance the fire resistance of the zone of passage described hereinbefore, intumescent fire-resisting material has been inserted according to the invention in the form of lengths of tubing 9 which are provided with a longitudinal cut 10 (Figure 3) and which fit tightly round the lines 3 and are squeezed against the rubber blocks 6.

Figure 3 depicts a length of tubing 9 which can be bent open along its longitudinal cut, fitted tightly round a cable 3 and then pushed up against the rubber blocks 6. This is also readily achieved when a great number of cables are present in a relatively thick bundle, as represented in Figures 1 and 2. Thus a large amount of fire-resistant material is deposited near the passage, so that in the event of a fire a thick layer of heatinsulating and slit-sealing matter accumulates against the rubber blocks 6. Tests have shown that this effect produced by the invention is sufficiently strong, also when material that is not fire-resistant is used for the rubber blocks 6, to conform to a certain official body of fire-resistance requirements.

Figure 4 represents a variant design of a length of tubing 11, characterized in that the length of tubing is provided at one end with an enlarged rim 12. The longitudinal cut 13 has an alternative shape in the sense that this cut follows a helical course.

The invention is not restricted to the embodiments of the length of tubing depicted in Figures 3 and 4, but encompasses other forms as well, such as square or hexagonal lengths of tubing.

Furthermore, the scope of the invention is not confined to a lead-through system with rubber blocks, but the invention is applicable with equal efficacy to various other types of lead-through equipment.

CLAIMS

1. Installation for fire protection consisting of a conduit or cable which is passed through a wall, whilst fire resistant means with intumescent effect have been applied in the vicinity of the passage, characterized in that the fire resistant means consist of a length of tubing provided with a longitudinal cut and fitting tightly round the conduit.

2. A length of tubing manufactured of fire resistant material with an intumescent effect, obviously intended for a fire protection installation according to claim 1.

3. A length of tubing according to claim 2, characterized in that the longitudinal cut follows a helical course.

4. A length of tubing according to claim 2, characterized by an enlarged rim at one end.

FIG 1

FIG. 2

FIG.3

FIG.4

0146193

## European Patent Office

# EUROPEAN SEARCH REPORT

Application number

EP 84 20 1853

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 184 651 (G. MÜLLENDER)<br>* Page 3, line 38 - page 4, line 1; figure 1 * | 1 | F 16 L 5/02<br>F 16 L 59/00<br>H 02 G 3/22 |
| X | CH-A- 491 318 (G. MÜLLENDER)<br>* Column 2, lines 15-32; figures * | 1 | |
| X | FR-A-1 459 226 (P. DELRIEU et al.)<br>* Claims 1,2; figures 1-3 * | 1 | |
| X | DE-C- 407 673 (J.E. ZINK)<br>* Figures 1,2 * | 1,4 | |
| X | US-A-4 218 814 (HODAPP)<br>* Figures 1,11 * | 1,3 | TECHNICAL FIELDS SEARCHED (Int. Cl.4) |
| X | GB-A- 777 823 (GUSTIN-BACON MANUFACTURING COMPANY)<br>* Page 1, lines 30-37 * | 1 | F 16 L<br>H 02 G |
| A | EP-A-0 090 635 (CHEETHAM et al.)<br>* Claims 1-6 * | 1 | |
| A | NL-A-7 907 011 (O.L. RADZISHEVSKY et al.) | | |

--- -/-

The present search report has been drawn up for all claims

| Place of search | Date of completion of the search | Examiner |
|---|---|---|
| THE HAGUE | 11-03-1985 | ANGIUS P. |

**European Patent Office**

**EUROPEAN SEARCH REPORT**

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| A | NL-A-8 001 473 (STUDSVIK ENERGITEKNIK) ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 11-03-1985 | ANGIUS P. |